# FASCICULE DE BREVET EUROPEEN

(11) **EP 0 935 163 B1**
(45) Date de publication et mention de la délivrance du brevet: **12.05.2004**
(21) Numéro de dépôt: 98102005.0
(22) Date de dépôt: 05.02.1998
(51) Int. Cl.: G03B 29/00

(54) **Appareil de prise de vues à déclencheur tactile**
Kamera mit berührungsempfindlichem Auslöser
Camera with a tactile release knob

(43) Date de publication de la demande: 11.08.1999
(73) Titulaire: ASULAB S.A., 2074 Marin (CH)
(72) Inventeur: Grupp, Joachim, 2003 Neuchâtel (CH)
(74) Mandataire: Thérond, Gérard Raymond

(56) Documents cités:
- EP-A- 0 674 247
- DE-A- 4 000 525
- FR-A- 2 671 411
- GB-A- 157 195
- PATENT ABSTRACTS OF JAPAN vol. 11, no. 178 (P-584), 9 juin 1987 & JP 62 009289 A (CASIO COMPUT.CO.LTD.), 17 janvier 1987,
- PATENT ABSTRACTS OF JAPAN vol. 4, no. 115 (P-023), 16 août 1980 & JP 55 069130 A (SANYO ELECTRIC CO.LTD.), 24 mai 1980,

## Description

La présente invention a pour objet un appareil de prise de vues à déclencheur tactile permettant d'éviter de faire bouger l'appareil une fois que la visée a été effectuée. L'invention concerne plus particulièrement un appareil de prise de vues miniature incorporé dans une boîte de montre-bracelet, que l'utilisateur garde au poignet pour effectuer des prises de vues, les moyens de déclenchement étant prévus pour ne provoquer aucun déplacement de l'appareil, ce qui pourrait produire une image floue, notamment dans le cas où la vitesse d'obturation se trouverait insuffisante.

On trouve déjà dans des documents antérieurs la description de montres-bracelets permettant d'effectuer des prises de vue. A titre d'exemple on peut citer le brevet FR 2 671 411 qui décrit un dispositif miniaturisé purement mécanique, utilisant une pellicule hors-standard, pouvant être dissimulée dans le boîtier d'une montre-bracelet et ne comportant aucun viseur pour prendre au jugé la photographie d'un éventuel agresseur. Le brevet JP 62 009289, bien que plus ancien, décrit un produit un peu plus sophistiqué, en ce qu'il est de type électronique et comporte un viseur constitué par écran à cristaux liquides occupant tout le cadran en dessous de la glace, le déclencheur dont la nature n'est pas précisée, étant situé en dehors de ladite glace. Dans ces deux documents il n'existe à l'évidence aucune recherche au niveau de la qualité de l'image obtenue.

Dans les appareils de prise de vues usuels tenus à la main, le déclenchement de l'obturateur est obtenu en exerçant avec un doigt une pression sur un bouton aménagé dans le boîtier, tout en maintenant fermement l'appareil immobile, soit avec l'autre main, soit avec un autre doigt si l'appareil est de taille suffisamment petite pour être tenu d'une seule main. Pour accroître encore la stabilité de l'appareil lors de la prise de vue, les perfectionnements ont par exemple consisté à rendre le toucher du déclencheur plus sensible et/ou à décomposer ce toucher en une phase d'armement de l'obturateur, pouvant être signalée par un symbole dans le viseur, et en une phase du déclenchement lorsqu'on a fini d'exercer la pression.

Si on exclut les dispositifs de déclenchement par flexible, par retardateur ou par commande à distance, on voit que les moyens de déclenchement des dispositifs de l'art antérieur ont l'inconvénient de toujours imposer une force de pression à laquelle doit être opposée une force contraire pour maintenir la stabilité de l'appareil lors d'une prise de vue.

Il convient toutefois de signaler le brevet JP 55 069130 qui décrit non pas une montre-bracelet mais uniquement un appareil photographique dans lequel le déclencheur est de type tactile, mais n'est évidemment pas situé sur l'oeilleton du viseur.

La présente invention vise à éviter les inconvénients susmentionnés en procurant un appareil de prise de vues dont les moyens de déclenchement sont séparés des moyens permettant d'armer l'obturateur, lesdits moyens de déclenchement étant tactiles et ne nécessitant plus une pression pour être activés, mais seulement le contact d'un doigt.

L'invention concerne plus particulièrement un appareil de prise de vues de très petites dimensions, destiné à être attaché à une partie du corps et non plus être tenu à la main pour effectuer l'opération de visée. Selon un mode de réalisation préféré, qui sera décrit par la suite plus en détail à titre d'exemple, l'appareil de prise de vue selon l'invention est incorporé à une boîte de montre-bracelet que l'utilisateur garde au poignet pendant la prise de vues.

A cet effet, l'invention concerne une montre-bracelet pour prises de vue avec un capteur tactile activable par le contact d'un doigt comme definit dans la rev. 1.

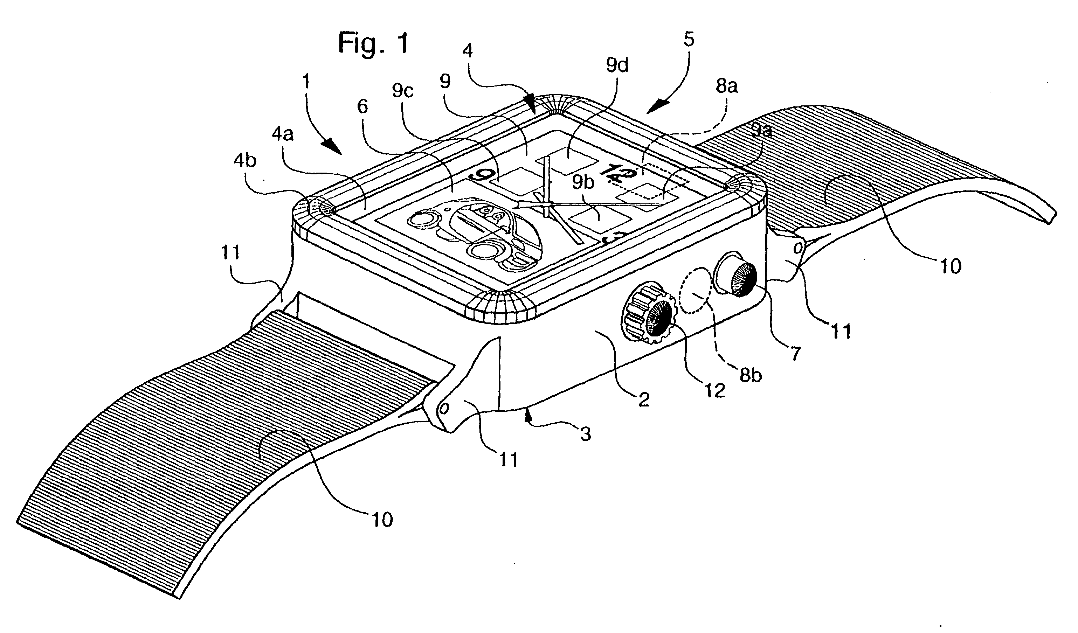

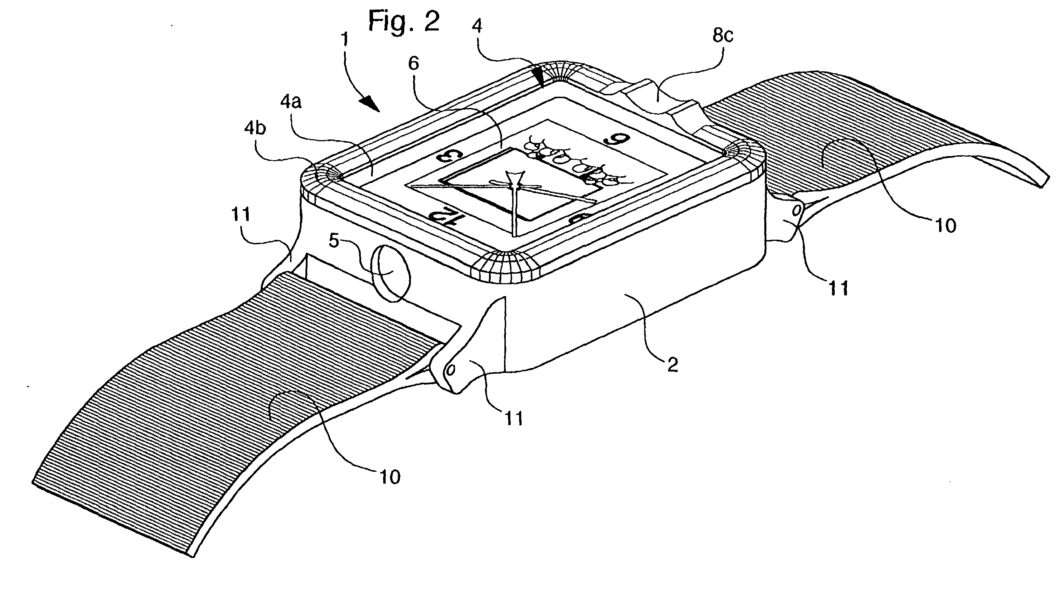

Le capteur est par exemple de type capacitif, inductif, à ultrasons ou infrarouge. Le capteur peut également être de type piézo-électrique ultrasensible. De tels capteurs sont bien connus de l'homme du métier qui peut par exemple se référer à l'article de Wayne Wehrer "Touch Technology Grows Up" paru dans la revue Information Display, pages 14-19, 7 & 8/95. Selon le type utilisé, le capteur pourra se trouver sur une même partie de la boîte que les moyens d'armement, ou au contraire sur une partie différente. Dans le cas d'un appareil de prise de vues de très petites dimensions, incorporé dans une boîte de montre-bracelet, les moyens d'armement de l'obturateur sont par exemple constitués par un bouton-poussoir positionné sur la carrure et les moyens de déclenchement par un capteur agencé soit sur une zone de la glace à proximité dudit bouton-poussoir, soit sur la carrure ou la lunette.
D'autres caractéristiques et avantages de la présente invention apparaîtront dans la description suivante d'une forme de réalisation préférée, en référence aux figures 1 et 2 représentant en perspective sous deux angles différents une montre-bracelet incorporant un appareil de prise de vues selon l'invention pourvu de moyens de déclenchement par capteur tactile.

La montre-bracelet représentée aux figures 1 et 2 est d'un type traditionnel avec une boîte 1 formée par une carrure rectangulaire 2 pourvue à la position 3h d'une couronne 12 de remontoir et fermée à sa partie inférieure par un fond 3 et à sa partie supérieure 4 par une glace 4a maintenue par une lunette 4b. La boîte 1 comporte des cornes 11 qui permettent la fixation de deux brins d'un bracelet 10 permettant de porter la montre au poignet. Cette boîte 1 peut recevoir tout type de mouvement horloger permettant l'affichage de l'heure sur un cadran 9, les opérations usuelles de réglage et/ou remontage s'effectuant au moyen de la couronne 12. La fonction horométrique ne faisant pas directement partie de l'invention, il n'en sera pas donné de description plus détaillée.

Cette boîte 1 incorpore en outre un appareil de prise de vues miniature de type digital dont on a représenté que les parties nécessaires à la compréhension de l'invention. Il comporte sur la partie avant de la carrure 2 sensiblement comprise entre les positions 10h et 2h un objectif 5, plus particulièrement visible sur la figure 2, des moyens de visée 6 formés par une cellule d'affichage matriciel sur la moitié inférieure du cadran 9, des moyens d'armement consistant en un bouton-poussoir 7 positionné sur la carrure 2 sensiblement à la position 2h et des moyens de déclenchement 8 formés par un capteur capacitif 8a situé sur la glace 4a sensiblement à la position 2h et repérée sur le cadran 9 par un pictogramme 9a.

De tels capteurs capacitifs sont bien connus de l'homme de métier et peuvent être réalisés au moyen d'électrodes transparentes ne faisant pas obstacle à la lecture des informations portées par le cadran 9. A cet effet, on se reportera par exemple au brevet CH 607 872 ou à des brevets ultérieurs de perfectionnement concernant par exemple le circuit d'interprétation des signaux, tel que le brevet EP 0 674 247. On observera que le cadran 9 peut comporter dans sa partie supérieure d'autres zones 9b, 9c, 9d pouvant être utilisées soit pour d'autres capteurs soit pour l'affichage d'informations en relation avec les fonctions ou le fonctionnement de l'appareil de prise de vues, tel que le défilement ou l'effacement de vues déjà prises (capteur) ou l'indication du nombre de vues restantes (affichage à cristaux liquides). Sur la figure 1, on a également représenté en pointillés un autre positionnement possible du capteur de déclenchement 8b, sur la carrure 2 de la boîte 1, entre la couronne de remontoir 12 et le bouton-poussoir d'armement 7. Dans ce mode de réalisation, le capteur 8b peut être un capteur à infrarouge de type connu tels que ceux commercialisés par la société Carroll Touch, Round Rock, Texas.

En se référant maintenant à la figure 2, on voit que le capteur de déclenchement 8c est positionné sur la lunette 4b à la position 6h, ledit capteur pouvant être un capteur piézo-électrique de type connu. Le bouton poussoir d'armement 7 peut être positionné comme indiqué précédemment, ou occuper sur la carrure 2 une position plus proche du capteur, par exemple à 4h ou à 8h. Dans le mode de réalisation représenté à la figure 2, on voit que le viseur 6 peut occuper tout le cadran.

Le mode de fonctionnement de l'appareil de prise de vues qui vient d'être décrit est maintenant brièvement expliqué. L'utilisateur porte la montre à son poignet et arme l'appareil en pressant avec un doigt le bouton-poussoir 7. Le viseur 6 affiche alors l'image vue à travers l'objectif 5. Lorsque l'usager estime que le cadrage est satisfaisant, il approche son doigt du capteur 8a, 8b ou 8c pour provoquer le déclenchement. Dans le cas d'un capteur capacitif, on observera que la simple proximité du doigt (environ 0,2 mm) est suffisante pour obtenir le déclenchement. Aucune pression n'étant exercée, le risque de faire bouger l'appareil est à peu près nul, d'autant que l'utilisateur peut dans certaines circonstances utiliser ses avant-bras en guise de trépied.

## Revendications

1. Montre-bracelet électronique pour prises de vue comportant une boîte (1) délimitée par une carrure (2), un fond (3), un cadran (9) pour l'affichage de l'heure et une glace (4a), ladite boîte (1) étant pourvue d'un objectif (5), de moyens de visée (6), de moyens d'armement (7), d'un obturateur et de moyens de déclenchement séparés desdits moyens d'armement (7), **caractérisé en ce que** les moyens de déclenchement sont commandés par un capteur tactile transparent (8a) disposé sur la glace (4a) activable par le contact d'un doit.

2. Montre-bracelet selon la revendication 1, **caractérisée en ce que** le capteur (8a) formant les moyens de déclenchement est choisi parmi les capteurs de type capacitif, inductif, infrarouge, ultrason et pièzo-électrique.

3. Montre-bracelet selon la revendication 1, **caractérisée en ce que** les moyens de visée (6) sont formés par une cellule d'affichage matriciel occupant tout ou partie du cadran (9).

4. Montre-bracelet selon la revendication 1, **caractérisée en ce que** les moyens d'armement (7) sont constitués par un bouton-poussoir situé sur la carrure (2).

## Claims

1. Electronic wristwatch for photos intake including a case (1) delimited by a middle part (2), a back cover (3), a dial (9) for the time display and a crystal (4a), said case (1) being provided with a lens (5), viewfinding means (6), shutter setting means (7), a shutter and shutter release means separated from said shutter setting means (7), **characterised in that** the shutter release means are controlled by a transparent touch type sensor (8a) arranged on the crystal (4a) and able to be activated by the contact of a finger.

2. Wristwatch according to claim 1, **characterised in that** the sensor (8a) forming the shutter release means is selected from among the capacitive, inductive, infrared, ultrasound and piezoelectric sensor types.

3. Wristwatch according to claim 1, **characterised in that** the viewfinding means (6) are formed by a matrix display cell occupying all or part of the dial (9).

4. Wristwatch according to claim 1, **characterized in that** the shutter setting means (7) is made of a push-button arranged on the middle part (2).

## Patentansprüche

1. Elektronische Armbanduhr für Bildaufnahmen, die ein durch ein Gehäusemittelteil (2), einen Boden (3), ein Zifferblatt (9) für die Anzeige der Uhrzeit und ein Uhrenglas (4a) begrenztes Gehäuse (1) umfasst, das mit einem Objektiv (5), Bildsuchermitteln (6), Aufziehmitteln (7), einem Verschluss sowie Auslösermitteln, die von den Aufziehmitteln (7) getrennt sind, versehen ist, **dadurch gekennzeichnet, dass** die Auslösermittel durch einen lichtdurchlässigen taktilen Sensor (8a), der auf dem Uhrenglas (4a) angeordnet ist und durch den Kontakt mit einem Finger aktivierbar ist, gesteuert werden.

2. Armbanduhr nach Anspruch 1, **dadurch gekennzeichnet, dass** der die Auslösermittel bildende Sensor (8a) aus Sensoren des kapazitiven Typs, des induktiven Typs, des infraroten Typs, des Ultraschalltyps und des piezoelektrischen Typs ausgewählt ist.

3. Armbanduhr nach Anspruch 1, **dadurch gekennzeichnet, dass** die Bildsuchermittel (6) durch eine matrixförmige Anzeigezelle gebildet sind, die das gesamte Zifferblatt (9) oder einen Teil hiervon einnimmt.

4. Armbanduhr nach Anspruch 1, **dadurch gekennzeichnet, dass** die Aufziehmittel (7) durch einen Druckknopf, der sich an dem Gehäusemittelteil (2) befindet, gebildet sind.
